# EUROPÄISCHE PATENTANMELDUNG

(11) **EP 3 618 237 A1**
(43) Veröffentlichungstag der Anmeldung: **04.03.2020**
(21) Anmeldenummer: 19194108.7
(22) Anmeldetag: 28.08.2019
(51) Int. Cl.: H02K 3/28, H02K 11/25

(54) **STATOR MIT EINER TEMPERATURERFASSUNGSEINHEIT FÜR EINEN ELEKTROMOTOR**

(30) Priorität: 31.08.2018 DE 102018121354
(71) Anmelder: Valeo Siemens eAutomotive Germany GmbH, 91056 Erlangen (DE)
(72) Erfinder: FINGER-ALBERT, Christian, 97688 Bad Kissingen (DE); OETZEL, Stefan, 98574 Schmalkalden (DE); MENZ, Michael, 97618 Hollstadt (DE)
(74) Vertreter: Dr. Gassner & Partner mbB

(57) **Zusammenfassung**

Stator (3) für einen Wechselstrommotor, umfassend:
- Windungen (9) einer ersten Schicht, die sich über einen ersten Teilbereich (7) des Stators (3) erstrecken und mit einer ersten Phase (A1, B1) verbindbar sind;
- Windungen (16) einer zweiten Schicht, die sich über einen zweiten Teilbereich (14) des Stators erstrecken und mit einer zweiten Phase (A3, B3) verbindbar sind;
wobei der erste Teilbereich (7) zu dem zweiten Teilbereich (14) versetzt ist und
mindestens ein Überlappungsbereich (13) herausgebildet wird, der kleiner als die jeweiligen Teilbereiche ist,
wobei im Überlappungsbereich (13) eine Temperaturerfassungseinheit angeordnet ist, die eingerichtet ist, eine Temperatur der Windungen (9, 16) im Überlappungsbereich zu messen.

## Beschreibung

Die Erfindung betrifft einen Stator mit einer Temperaturerfassungseinheit für einen Elektromotor.

### Stand der Technik

Elektromotoren sind allgemein bekannt und finden zunehmend Anwendung für den Antrieb von Fahrzeugen. Ein Elektromotor besteht aus einem Stator und einem Rotor.

Der Stator umfasst eine Vielzahl von Slots, in denen die Windungen geführt werden. Im Wicklungskopf laufen die Windungen zusammen und werden verbunden. Es ist für den Betrieb des Elektromotors nötig, die Temperatur im Stator zu überwachen.

### Aufgabe und Lösung

Aufgabe der vorliegenden Erfindung ist es, eine Temperatur der Windungen im Stator effizient zu ermitteln.

Erfindungsgemäß umfasst ein Stator für einen Wechselstrommotor Windungen einer ersten Schicht, die sich über einen ersten Teilbereich des Stators erstrecken und mit einer ersten Phase verbindbar sind, Windungen einer zweiten Schicht, die sich über einen zweiten Teilbereich des Stators erstrecken und mit einer zweiten Phase verbindbar sind, wobei der erste Teilbereich zu dem zweiten Teilbereich versetzt ist und mindestens ein Überlappungsbereich herausgebildet wird, der kleiner als die jeweiligen Teilbereiche ist, wobei im Überlappungsbereich eine Temperaturerfassungseinheit angeordnet ist, die eingerichtet ist, eine Temperatur der Windungen im Überlappungsbereich zu messen.

In dem Überlappungsbereich liegen zwei Windungen, die von unterschiedlichen Phasen gespeist werden. Es ist somit lediglich nötig eine einzelne Temperaturerfassungseinheit am Stator anzuordnen, um die Temperatur von zwei Windungen, die von unterschiedlichen Phasen gespeist werden zu ermitteln.

In einer Ausgestaltung der Erfindung kann die Temperaturerfassungseinheit zwei Sensoren umfassen und jeweils ein Sensor an einem Außendurchmesser und an einem Innendurchmesser des Stators angeordnet sein, und jeweils ein Sensor zum Messen der Temperatur der Windungen der ersten und zweiten Schicht im Überlappungsbereich eingerichtet sein.

Die Temperaturerfassungseinheit mit zwei Sensoren kann die Temperatur der Windungen pro Phase getrennt erfassen, wobei jedoch die Temperaturerfassungseinheit lediglich einmal auf dem Stator angeordnet ist und dadurch Signalkabel eingespart werden kann.

Am Außen- und Innendurchmesser des Stators oder des Wickelkopfs ist es besonders einfach die Temperatur zu messen.

Bevorzugt kann der Stator Windungen in einer dritten Schicht umfassen, die zwischen der ersten und zweiten Schicht liegen und sich über einen dritten Teilbereich des Stators erstrecken und mit einer dritten Phase verbindbar sind, wobei ein Teilbereich zu einem anderen Teilbereich versetzt ist und ein Überlappungsbereich herausgebildet wird, der kleiner als die jeweiligen Teilbereiche ist, wobei im Überlappungsbereich die Temperaturerfassungseinheit angeordnet ist, die eingerichtet ist, eine Temperatur der Windungen im Überlappungsbereich zu messen.

Im Überlappungsbereich ist es möglich die Temperatur von Windungen in allen drei Schichten, die jeweils von einer unterschiedlichen Phase gespeist werden, an einer einzigen Position des Stators zu messen.

In einer weiteren Ausgestaltung der Erfindung kann der Stator Windungen in der erste Schicht, die sich über einen vierten Teilbereich des Stators erstrecken und mit einer vierten Phase verbindbar sind, Windungen in der zweiten Schicht, die sich über einen fünften Teilbereich des Stators erstrecken und mit einer fünften Phase verbindbar sind, Windungen in der dritten Schicht, die sich über einen sechsten Teilbereich des Stators erstrecken und mit einer sechsten Phase verbindbar sind umfassen, wobei die Windungen einer gleichen Schicht mit den Windungen einer anderen Schicht mehrere Überlappungsbereiche bilden, die kleiner als die jeweiligen Teilbereiche sind, wobei in mindestens einer der mehreren Überlappungsbereichen eine Temperaturerfassungseinheit angeordnet ist, die eingerichtet ist, eine Temperatur der Windungen im Überlappungsbereich zu messen.

Jeweils zwei Windungen in nebeneinander liegenden Schichten bilden einen Überlappungsbereich. Jeweils zwei Schichten in der ersten und dritten Schicht bilden einen weiteren Überlappungsbereich. Drei Windungen in unterschiedlichen Schichten bilden einen gesamten Überlappungsbereich.

Mit der Auswahl der Position der Temperaturerfassungseinheit in einem dieser Überlappungsbereiche kann an dieser ausgewählten Position die Erfassung der Temperatur von einer Vielzahl an Windungen erfolgen. Im vorteilhaftesten Fall kann die Temperatur von drei Windungen an einer einzigen Position erfasst werden. Den gesamten Überlappungsbereich und den weiteren Überlappungsbereich gibt es beispielsweise jeweils viermal auf dem Stator.

Bevorzugt können Windungen der ersten oder zweiten Schicht, die sich über zwei Teilbereiche der gleichen Schicht erstrecken, mit Windungen der dritten Schicht, die sich über einen Teilbereich erstrecken, und Windungen aus einem weiteren Teilbereich der ersten oder zweiten Schicht einen erweiterten Überlappungsbereich bilden, wobei im erweiterten Überlappungsbereich eine Temperaturerfassungseinheit angeordnet ist, die eingerichtet ist, eine Temperatur der Windungen zu messen.

Der erweiterte Überlappungsbereich liegt am Rand des Teilbereichs einer Windung in der ersten oder zweiten Schicht. In einer dieser Schichten beginnen direkt die Windungen einer weiteren Phase. Es entsteht somit ein erweiterter Überlappungsbereich, in dem am Außen- und Innendurchmesser zusammengenommen die Temperatur von drei Windungen, die mit jeweils einer unterschiedlichen Phase gespeist werden, gemessen werden können.

Weiter bevorzugt kann ein Elektromotor mindestens zwei Gleichrichter umfassen und jeder der Gleichrichter mit mindestens einer Windung verbindbar sein, wobei die Windungen in unterschiedlichen Schichten liegen.

Die Windungen in unterschiedlichen Schichten bilden einen Überlappungsbereich und innerhalb dieses Überlappungsbereichs ist es mit einer einzigen Temperaturerfassungseinheit möglich die Temperatur von Windungen zu ermitteln, die von unterschiedlichen Gleichrichtern gespeist werden.

Weiter bevorzugt kann der Elektromotor mindestens zwei Gleichrichter umfassen und jeder der Gleichrichter mit Windungen in drei verschiedenen Schichten und einem halben Statorbereich (A, B) verbunden sein.

Die Windungen können so an verschiedenen Gleichrichtern angebunden sein und gleichzeitig einen Überlappungsbereich bereitstellen, in dem die Temperaturerfassungseinheit die Temperatur von Windungen erfasst, die von verschiedenen Gleichrichtern gespeist werden.

In einer Ausgestaltung der Erfindung kann die Temperaturerfassungseinheit eingerichtet sein, die Temperatur von mindestens zwei Windungen in verschiedenen Statorbereichen zu erfassen.

Die Windungen in verschiedenen Statorbereichen können so an verschiedenen Gleichrichtern angebunden sein und gleichzeitig einen Überlappungsbereich bereitstellen, in dem die Temperaturerfassungseinheit die Temperatur von Windungen erfasst, die von verschiedenen Gleichrichtern gespeist werden und in verschiedenen Statorbereichen liegen.

In einer weiteren Ausgestaltung der Erfindung kann der Elektromotor zwei Temperaturerfassungseinheiten aufweisen und jede Temperaturerfassungseinheit in einem der beiden gesamten Überlappungsbereichen angeordnet sein.

In den beiden gesamten Überlappungsbereichen kann die Temperatur von jeweils drei Windungen erfasst werden. Es ist somit möglich lediglich an zwei Postionen des Stators die Temperatur von alle sechs Windungen, die mit sechs Phasen der beiden Gleichrichter gespeist werden, zu überwachen.

Erfindungsgemäß weist ein Fahrzeug einen Stator oder einen Elektromotor gemäß einer der bevorzugten Ausgestaltungen auf.

### Figurenbeschreibung

Figur 1 zeigt ein Windungsschema eines Elektromotors. Figur 2 zeigt eine Draufsicht auf einen Stator.
Figur 3 zeigt eine Draufsicht auf einen Stator mit zwei versetzten Windungen in zwei Schichten.
Figur 4 zeigt eine Draufsicht auf einen Stator mit drei versetzten Windungen in drei Schichten.
Figur 5 zeigt eine Draufsicht auf einen Stator mit sechs versetzten Windungen in drei Schichten.
Figur 6 zeigt ein Fahrzeug mit einem Stator in einem Elektromotor und zwei Gleichrichtern.

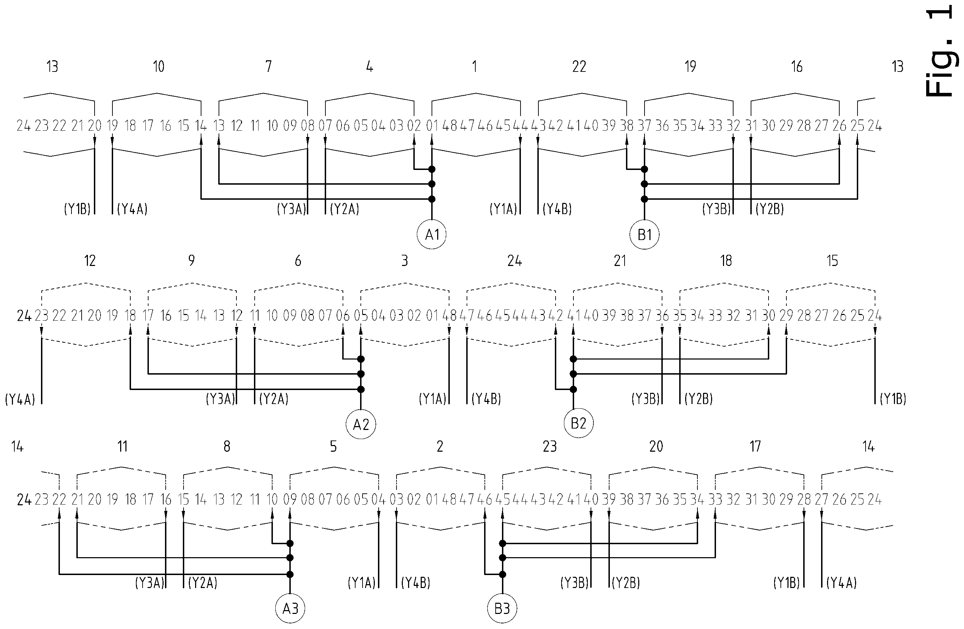

Figur 1 zeigt das Windungsschema eines Stators für einen Elektromotor. Wie aus dieser Figur ersichtlich ist, liegen die Windungen in drei Schichten. Die Windungen in jeder Schicht werden durch mindestens zwei Phasen gespeist. Insgesamt ist in Figur 1 ein Elektromotor dargestellt der mit insgesamt 6 verschiedenen Phasen A1, A2, A3, B1, B2, B3 gespeist wird, wobei jeweils drei Phasen von verschiedenen Gleichrichtern bereitgestellt werden. Jeder Gleichrichter speist drei Phasen in jeweils einem Statorbereich.

Wie ebenfalls aus Figur 1 ersichtlich ist, erstrecken sich die Windungen, die von einer ersten Phase A1 gespeist werden von Slot 19 bis Slot 44. Die Windungen in dieser Schicht, die von einer zweiten Phase B1 gespeist werden, erstrecken sich von Slot 43 bis Slot 20.

Die Windungen der Phase A2 in der zweiten Schicht erstrecken sich von Slot 23 bis Slot 48. Die Windungen der Phase B2 erstrecken sich von Slot 47 bis 24. Die Windungen der Phase A3 in der dritten Schicht erstrecken sich von Slot 4 bis Slot 27. Die Windungen der Phase B3 in der dritten Schicht erstrecken sich von Slot 28 bis Slot 3.

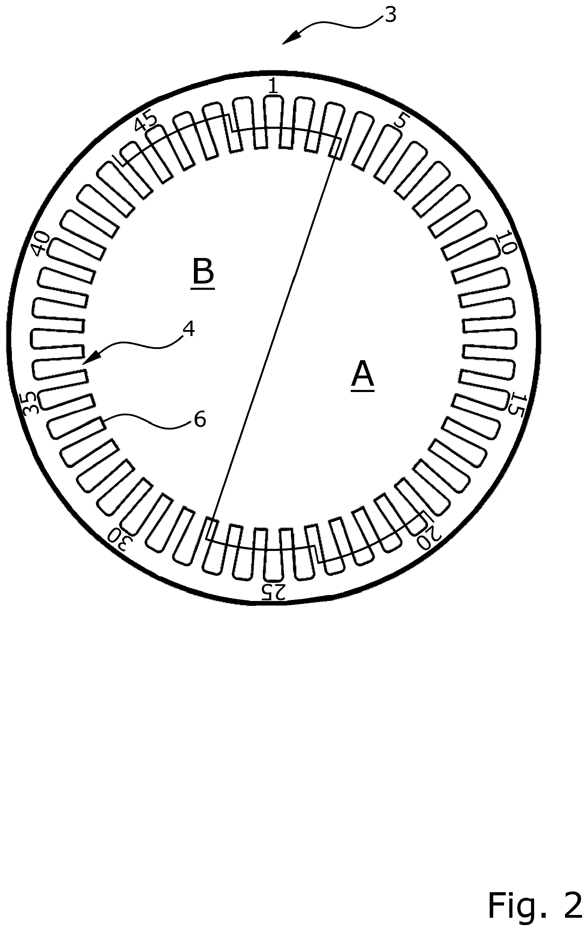

Figur 2 zeigt eine Draufsicht auf den Stator 3 mit den durchnummerierten Slots 1 - 48. Der Stator 3 weist 48 Slots 4 auf, die die Windungen in drei Schichten aufnehmen können. In Figur 2 sind des Weiteren die Zähne 6 zwischen den Slots dargestellt. In Verbindung mit Figur 1 zeigt sich, dass sich die Windungen der verschiedenen Phasen der verschiedenen Schichten jeweils um mindestens vier Slots überlappen.

Der Stator in Figur 2 ist ferner in zwei Statorbereiche A, B unterteilt, sodass in einer Ausführungsform die Windungen des einen Bereichs mit einem 3-Phasengleichrichter und die Windungen des anderen Bereichs mit einem anderen 3-Phasengleichrichter verbunden werden können.

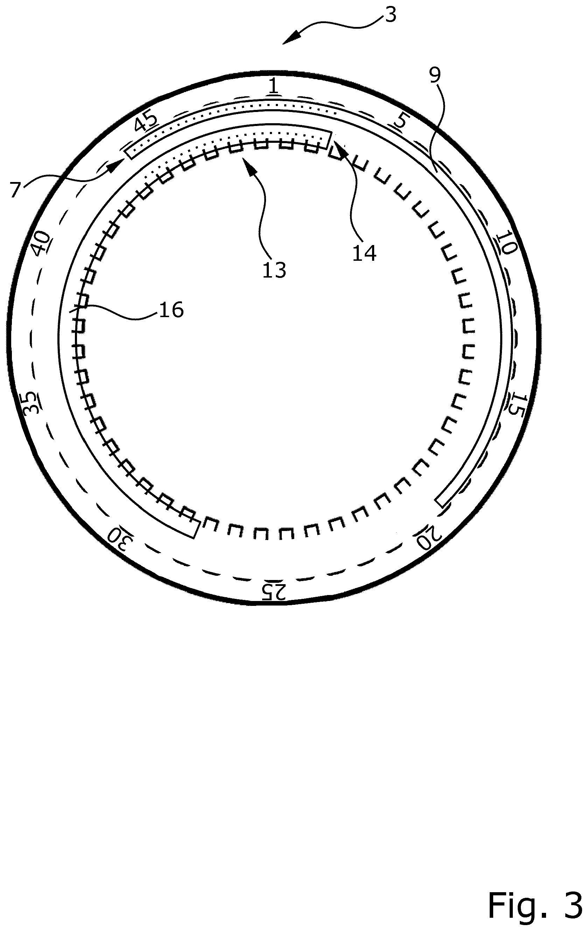

In Figur 3 sind die Zähne 6 nur angedeutet, um eine bessere Sicht auf die Windungen 9, 16 der einzelnen Phasen zu erhalten. Die Windungen 9 der Phase A1 erstrecken sich über einen Teilbericht 7 des Stators 3 von Slot 19 bis Slot 44. Die Windungen 16 der Phase B3 der zweiten Schicht erstrecken sich über einen Teilbereich 14 des Stators 3 von Slot 28 bis Slot 3. Die Windungen 9, 16 bilden von Slot 44 bis Slot 3 einen Überlappungsbereich 13 mit einer Länge von acht Slots. Der Überlappungsbereich 13 ist somit kürzer als die jeweiligen Teilbereiche 7, 14 der Windungen 9, 16. Die Teilbereiche 7, 14 sind beispielsweise jeweils 24 Slots lang.

Eine Temperaturerfassungseinheit, die in diesem Überlappungsbereich 13 angeordnet ist, kann beispielsweise mit zwei Sensoren jeweils die Temperatur der Windungen 9, 16 der Phase A1 und B3 messen. Es muss somit nur an einer Stelle des Stators 3 eine Temperaturerfassungseinheit angeordnet sein, um die Temperatur von mit verschiedenen Phasen betriebenen Windungen 9, 16 erfassen zu können. Es reicht somit aus nur an dieser Stelle des Stators einen Anschluss für eine Temperaturerfassungseinheit vorzusehen.

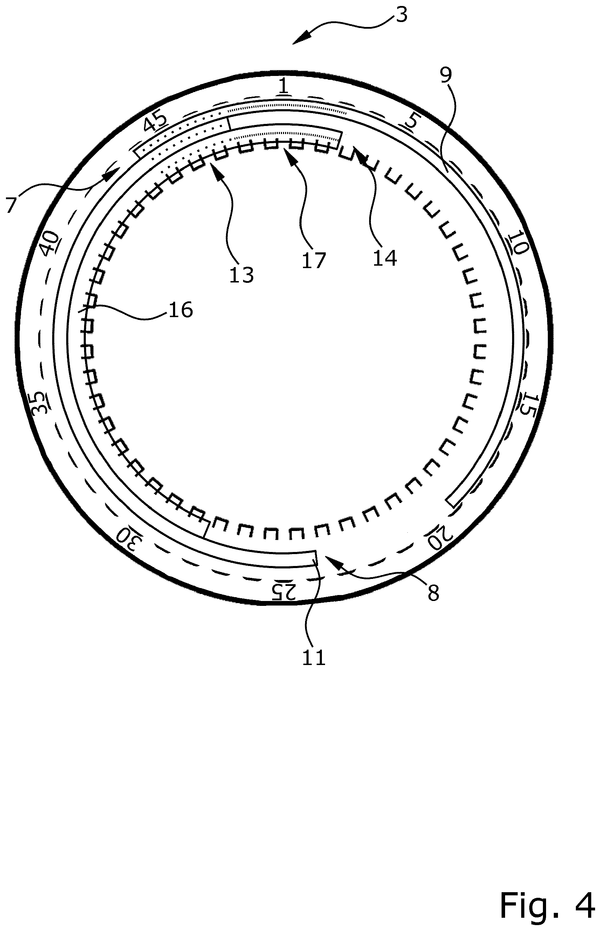

Figur 4 zeigt einen Stator 3 mit den Windungen 9, 11, 16 in allen drei Schichten. Die Windungen 9, 16 der ersten und zweiten Schicht erstrecken sich über die gleichen Teilbereiche 7, 14 wie in Figur 3. Die Windungen 11 der dritten Schicht, die zwischen der ersten und zweiten Schicht liegt, erstrecken sich über den Teilbereich 8 von Slot 47 bis Slot 24. Die drei Teilbereiche 7, 8, 14 sind einander versetzt und bilden einen Überlappungsbereich 13 in der Größe von 4 Slots. In diesem Überlappungsbereich liegen somit die Windungen, die mit drei verschiedenen Phasen angesteuert werden.

In diesem Überlappungsbereich kann mit einer Temperaturerfassungseinheit, die beispielsweise 3 Temperatursensoren hat, die Temperatur von drei verschiedenen Windungen, die jeweils von drei unterschiedlichen Phasen gespeist werden, überwacht werden. Neben dem Überlappungsbereich 13 bildet sich noch ein weiterer Überwachungsbereich 17 heraus der zwar ebenfalls vier Slots lang ist, jedoch können dort nur jeweils Windungen von zwei anstatt von drei unterschiedlichen Phasen überwacht werden.

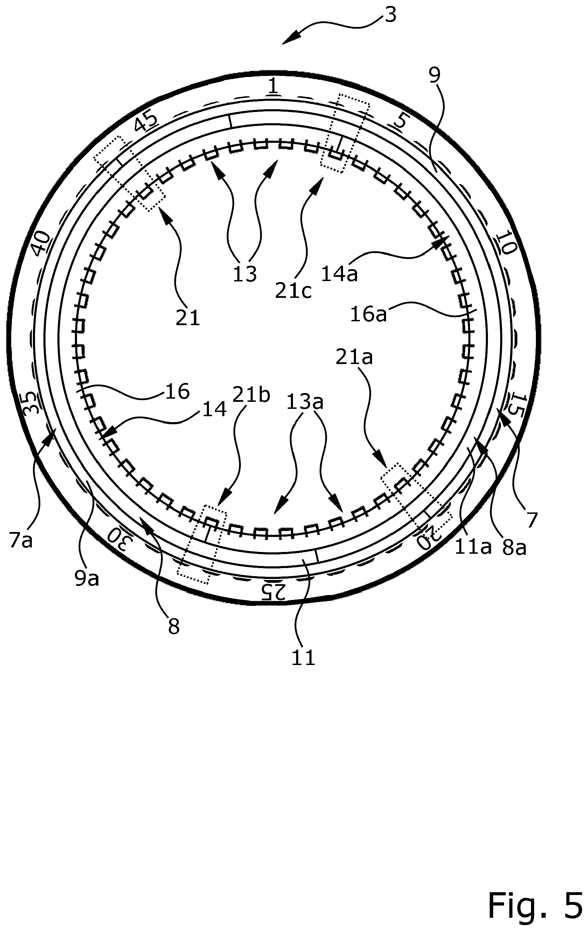

Figur 5 zeigt einen Stator 3 mit sechs Windungen 9, 9a, 11, 11a, 16, 16a, die von sechs Phasen von zwei 3-Phasen-Gleichrichtern gespeist werden. Die Windungen 9, 11a, 16a werden von einem 3-Phasen-Gleichrichter gespeist und die drei Windungen 9a, 11, 16 von einem anderen.

Beim Vergleich von Figur 5 und 2 ist ersichtlich, dass die Windungen 9, 11a, 16a im Statorbereich A und die Windungen 9a, 11, 16 im Statorbereich B liegen.

Ein weiterer Vergleich mit Figur 4 verdeutlicht, dass sich die Windungen über insgesamt sechs Teilbereiche 7, 7a, 8, 8a, 14, 14a erstrecken.

Die Windungen 9, 9a, 16, 16a in den Teilbereichen 7, 7a, 14, 14a in der ersten oder zweiten Schicht grenzen in der gleichen Schicht aneinander an. Ferner Überlappen sich in diesen Bereich auch die Windungen der anderen Teilbereiche.

Es bildet sich somit ein erweiterter Überlappungsbereich 21, 21a, 21b, 21c heraus, der direkt an den Überlappungsbereich 13, 13a angrenzt.

Die erweiterten Überlappungsbereiche 21, 21a, 21b, 21c nutzen einen Slot der Überlappungsbereiche 13, 13a und einen weiteren daneben liegenden Slot.

Im erweiterten Überlappungsbereich 21, 21a, 21b, 21c kann an einer Position die Temperatur von vier Windungen, die mit vier unterschiedlichen Phasen gespeist werden, ermittelt werden.

Ferner ist es im erweiterten Überlappungsbereich 21, 21a möglich am Außendurchmesser des Stators 3 die Temperatur von Windungen zu messen, die von verschieden Gleichrichtern gespeist werden.

Im erweiterten Überlappungsbereich 21b, 21c ist es möglich am Innendurchmesser des Stators 3 die Temperatur von Windungen zu messen, die von verschieden Gleichrichtern gespeist werden.

Es ist auch möglich zwei Temperaturerfassungseinheiten in zwei nebeneinanderliegende erweiterte Überlappungsbereiche 21, 21 a oder 21b, 21c anzuordnen. Es ist damit möglich, die Temperatur von Windungen zu messen, die von unterschiedlichen Gleichrichtern gespeist werden und trotzdem beide Temperaturerfassungseinheiten mit einer Zuleitung aufgrund ihrer Nähe zueinander anzusteuern.

Beispielsweise sind in Figur 5 vier erweiterter Überlappungsbereiche 21, 21a, 21b, 21c dargestellt. Diese besehen aus Slot 43-44, 19-20, 27-28, 3-4.

Ein Temperaturerfassungseinheit mit beispielsweise drei Sensoren, die in einem der erweiterter Überlappungsbereichen angeordnet ist, kann mit drei Sensoren an zwei Slot die Temperatur von drei Windungen im Innen- und Außendurchmesser überwachen.

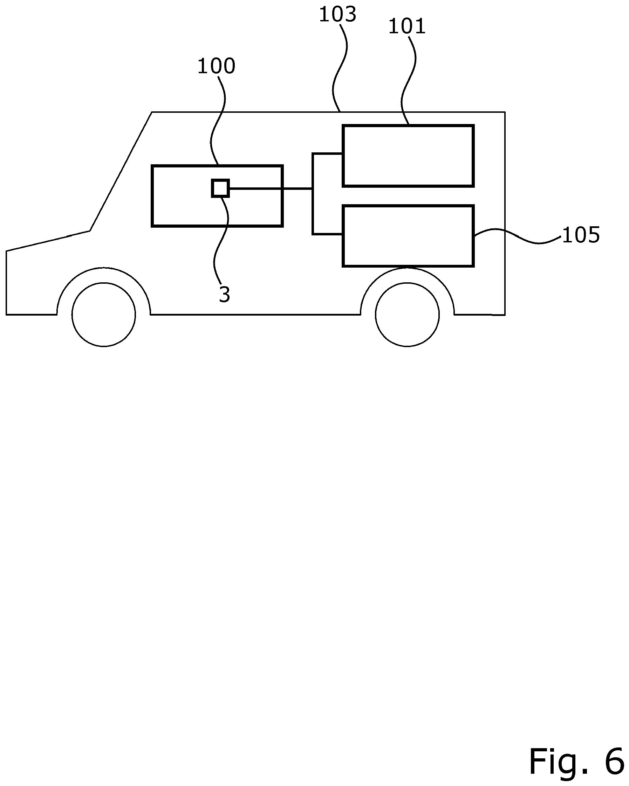

Figur 6 zeigt ein Fahrzeug 103 mit einem Elektromotor 100 und einem Stator 3. Die Windungen des Stators sind an zwei Gleichrichtern 101, 105 angeschlossen.

## Patentansprüche

1. Stator (3) für einen Wechselstrommotor, umfassend:
- Windungen (9) einer ersten Schicht, die sich über einen ersten Teilbereich (7) des Stators (3) erstrecken und mit einer ersten Phase (A1, B1) verbindbar sind;
- Windungen (16) einer zweiten Schicht, die sich über einen zweiten Teilbereich (14) des Stators erstrecken und mit einer zweiten Phase (A3, B3) verbindbar sind;
wobei der erste Teilbereich (7) zu dem zweiten Teilbereich (14) versetzt ist und
mindestens ein Überlappungsbereich (13) herausgebildet wird, der kleiner als die jeweiligen Teilbereiche ist,
wobei im Überlappungsbereich (13) eine Temperaturerfassungseinheit angeordnet ist, die eingerichtet ist, eine Temperatur der Windungen (9, 16) im Überlappungsbereich zu messen.

2. Stator (3) gemäß Anspruch 1, wobei die Temperaturerfassungseinheit zwei Sensoren umfasst, und jeweils ein Sensor an einem Außendurchmesser und an einem Innendurchmesser des Stators (3) angeordnet ist und jeweils ein Sensor zum Messen der Temperatur der Windungen (9, 16) der ersten und zweiten Schicht im Überlappungsbereich (13) eingerichtet ist.

3. Stator (3) gemäß einer der vorherigen Ansprüche, umfassend Windungen (11) einer dritten Schicht, die zwischen der ersten und zweiten Schicht liegt, und sich über einen dritten Teilbereich (8) des Stators (3) erstrecken und mit einer dritten Phase (A2, B2) verbindbar sind, wobei ein Teilbereich (7, 8, 14) zu einem anderen Teilbereich versetzt ist und ein Überlappungsbereich (13) herausgebildet wird, der kleiner als die jeweiligen Teilbereiche ist, wobei im Überlappungsbereich (13) die Temperaturerfassungseinheit angeordnet ist, die eingerichtet ist, eine Temperatur der Windungen (9, 11, 16) im Überlappungsbereich (13) zu messen.

4. Stator (3) gemäß einer der vorherigen Ansprüche, umfassend:
- Windungen (9a) in der erste Schicht, die sich über einen vierten Teilbereich (7a) des Stators (3) erstrecken und mit einer vierten Phase verbindbar sind;
- Windungen (16a) in der zweiten Schicht, die sich über einen fünften Teilbereich (14a) des Stators erstrecken und mit einer fünften Phase verbindbar sind;
- Windungen (11a) in der dritten Schicht, die sich über einen sechsten Teilbereich (8a) des Stators (3) erstrecken und mit einer sechsten Phase verbindbar sind;
wobei die Windungen (9, 9a, 11, 11a, 16, 16a) einer gleichen Schicht mit den Windungen einer anderen Schicht mehrere Überlappungsbereiche (13, 13a) bilden, die jeweils kleiner als die jeweiligen Teilbereiche sind, wobei in mindestens einer der mehreren Überlappungsbereiche eine Temperaturerfassungseinheit angeordnet ist, die eingerichtet ist, eine Temperatur der Windungen zu messen.

5. Stator (3) gemäß Anspruch 4, wobei Windungen (9, 9a, 16, 16a) der ersten oder zweiten Schicht, die sich über zwei Teilbereiche (7, 7a, 14, 14a) der gleichen Schicht erstrecken, mit Windungen (11, 11a) der dritten Schicht, die sich über einen Teilbereich (8, 8a) erstrecken, und Windungen (9, 9a, 16, 16a) aus einem weiteren Teilbereich (7, 7a, 14, 14a) der ersten oder zweiten Schicht einen erweiterten Überlappungsbereich (21, 21a, 21b, 21c) bilden, wobei im erweiterten Überlappungsbereich eine Temperaturerfassungseinheit angeordnet ist, die eingerichtet ist, eine Temperatur der Windungen zu messen.

6. Elektromotor mit einem Stator (3) gemäß einer der vorherigen Ansprüche, wobei der Elektromotor ferner mindestens zwei Gleichrichter umfasst und jeder der Gleichrichter mit mindestens einer Windung verbunden ist, wobei die Windungen in unterschiedlichen Schichten liegen.

7. Elektromotor mit einem Stator (3) gemäß einer der vorherigen Ansprüche, wobei der Elektromotor ferner mindestens zwei Gleichrichter umfasst und jeder der Gleichrichter mit Windungen in drei verschiedenen Schichten und einem halben Statorbereich (A, B) verbunden ist.

8. Elektromotor mit einem Stator (3) gemäß Anspruch 7, wobei die Temperaturerfassungseinheit eingerichtet ist, die Temperatur von mindestens zwei Windungen in verschiedenen Statorbereichen (A, B) zu erfassen.

9. Elektromotor mit einem Stator (3) gemäß Anspruch 8, wobei der Elektromotor mindestens zwei Temperaturerfassungseinheiten aufweist und jede Temperaturerfassungseinheit in einem erweiterten Überlappungsbereich (21, 21a, 21b, 21c) angeordnet ist.

10. Fahrzeug mit einem Stator (3) oder einem Elektromotor gemäß einer der vorherigen Ansprüche.
